(19) 

Europäisches
Patentamt

European
Patent Office

Office européen
des brevets

(11) EP 4 485 773 A1

(12) EUROPEAN PATENT APPLICATION

(43) Date of publication:
01.01.2025 Bulletin 2025/01

(21) Application number: 23181567.1

(22) Date of filing: 26.06.2023

(51) International Patent Classification (IPC):
H02M 1/00 (2006.01)          H02M 7/483 (2007.01)
H02M 7/487 (2007.01)         H02M 7/49 (2007.01)

(52) Cooperative Patent Classification (CPC):
H02M 1/007; H02M 1/0095; H02M 7/4833;
H02M 7/4835; H02M 7/487; H02M 7/49

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: ABB SCHWEIZ AG
5400 Baden (CH)

(72) Inventors:
• SCHWEIZER, Mario
5406 Rütihof (CH)
• KIEFERNDORF, Frederick
5400 Baden (CH)

(74) Representative: Sykora & König Patentanwälte
PartG mbB
Maximilianstraße 2
80539 München (DE)

(54) **METHOD, COMPUTER PROGRAM, AND CONTROLLER FOR CONTROLLING AN ELECTRICAL CONVERTER, AND COMPUTER-READABLE MEDIUM**

(57) A method for controlling an electrical converter (10) is provided. The electrical converter (10) comprises a main stage (12) adapted for converting a DC voltage into an intermediate voltage having at least two voltage levels and a filter cell stage (14) with a filter cell (30) for each phase of the main stage (12), with the main stage (12) comprising a DC link (20) and with each filter cell (30) being adapted for adding or subtracting a cell voltage of the filter cell (30) to the intermediate voltage. The method comprises the steps of: determining a first optimized pulse pattern ($OPP_{MC,abc}$) for the main stage (12) and a second optimized pulse pattern ($OPP_{AF,abc}$) for the filter cells (30) from an offline-computed optimized pulse pattern ($OPP_{base}$), wherein the first optimized pulse pattern ($OPP_{MC,abc}$) comprises switching instants for the main stage (12) over a next computation window ($\alpha_{win}$) and wherein the second optimized pulse pattern ($OPP_{AF,abc}$) comprises switching instants for filter cells (30) over the next computation window ($\alpha_{win}$); determining a neutral point potential ($V_{NP}$) depending on a measured lower DC link voltage ($V_{bot}$) and a measured upper DC link voltage ($V_{top}$) of the DC link (20); determining a first balancing signal ($U_{NPbal,abc}$) for the main stage (12) depending on the determined neutral point potential ($V_{NP}$); determining a second balancing signal ($U_{AFbal,abc}$) for the filter cells (30) depending on measured cell voltages ($V_{AFC,abc}$) of the filter cells (30); determining a first differential mode voltage ($U_{NPbal,DM,abc}$) from the first balancing signal ($U_{NPbal,abc}$); determining a second differential mode voltage ($U_{AFbal,DM,abc}$) from the second balancing signal ($U_{AFbal,abc}$); determining a first voltage change ($\Delta U_{MC,abc}$) from the first balancing signal ($U_{NPbal,abc}$) and the second differential mode voltage ($U_{AFbal,DM,abc}$); determining a second voltage change ($\Delta U_{AF,abc}$) from the second balancing signal ($U_{AFbal,abc}$) and the first differential mode voltage ($U_{NPbal,DM,abc}$); adjusting the first optimized pulse pattern ($OPP_{MC,abc}$) by moving its switching instants depending on the first voltage change ($\Delta U_{MC,abc}$) over the next computation window ($\alpha_{win}$) and adjusting the second optimized pulse pattern ($OPP_{AF,abc}$) by moving its switching instants depending on the second voltage change ($\Delta U_{AF,abc}$) over the next computation window ($\alpha_{win}$); determining a reference flux trajectory ($\Psi_{ref}$) over the next computation window ($\alpha_{win}$) depending on the adjusted first and second optimized pulse pattern ($OPP_{MC,abc}$, $OPP_{AF,abc}$); and controlling the electrical converter (10) depending on the reference flux trajectory ($\Psi_{ref}$) and on the adjusted first and second optimized pulse pattern ($OPP_{MC,abc}$, $OPP_{AF,abc}$).

Fig. 2

**Description**

FIELD OF THE INVENTION

The invention relates to the field of high-power electrical converter control. In particular, the invention relates to a method, a computer program, and a controller for controlling an electrical converter, and to a computer-readable medium, on which the computer program is stored.

BACKGROUND OF THE INVENTION

A cost-effective electrical converter topology with high power quality is given with the 3L(A)NPC+AF topology, in particular in Medium Voltage (MV) applications. Here, 3L means 3 level, (A)NPC means neutral point clamped and/or active neutral point clamped and AF means active filter. The 3L(A)NPC is also referred to as main stage of the converter, main converter or, in short MC, in the following. The 3L(A)NPC topology combined with Active Filter cells (AF) offers several advantages, such as superior output voltage quality, low current threshold, low harmonic machine losses, reduced switching frequency of the main converter and consequently increased power level at low cost. It can be used in several applications, such as MV drives, for renewable energies, i.e. as converter for wind turbines, and other special purpose applications. Due to the superior voltage quality, the converter with AF cells can be used to drive sensitive loads such as direct-on-line (DOL) machines.

One of the main advantages of the topology is the small voltage steps that can be generated. The small voltage steps reduce the machine-side dv/dt and overvoltages, as well as the current THD (total harmonic distortion) and involved harmonic losses in the machine.

Balancing of a Neutral Point (NP) potential of the MC is one of the main challenges in controlling this system. To fully benefit from the improved power quality, a control scheme needs to cover the entire range of operating points of the machine, from low speed to high speed, and needs to balance the AF voltages and the MC NP potential in all operating points.

A Bridge converter platform may be intended to use a unified control scheme based on model predictive pulse pattern control (MP3C). Previously, a balancing concept for the AF voltages has been developed which integrates well into the OPP-based MP3C concept. However, the additional control task of controlling and keeping the NP potential of the MC balanced has not been addressed. Consequently, the risk of unbalanced NP potential and related reduced output voltage quality remained. Although there exist legacy NP control approaches that can be used with the 3L(A)NPC+AF topology and the OPP-MP3C concept, such as NP balancing with redundant voltage vectors or redundant OPPs, these approaches have shortcomings. They are based on tolerance bands and lead to repeated drifting of the NP potential until it is rebalanced. Such drifting of NP potential reduces the output voltage quality considerably.

The control scheme may work with optimized pulse patterns (OPPs) which are computed offline and stored in a lookup-table or database. As, for example, described in EP 2 469 692 A1, optimized pulse patterns may be modified online based on model predictive control, wherein pre-computed optimized pulse pattern switching angles are modified online in order to follow a reference flux trajectory. Generally, an optimized pulse pattern may be a sequence of switching transitions that has been optimized with respect to a certain optimization goal. For example, optimized pulse patterns may be computed offline for all modulation indices and switching frequencies of the motor, or of any other physical system that acts as the load of the converter, and may be optimized such that the overall current distortion for a given switching frequency is minimal.

In particular for a control scheme based on model predictive pulse pattern control (also denoted as MP3C core algorithm herein below), a balancing scheme should also be compatible with the full range of operation.

Existing control schemes to control the NP potential of 3L(A)NPC+AF topology can be summarized as follows:

- Conventional real-time CB-PWM for main converter and for AF, with common-mode voltage injection on the main converter reference signals to control the NP potential. Real-time Pulse Width Modulation (PWM) is not compatible with the MP3C core control approach. With MP3C, the switching pattern needs to be precomputed over a certain time-horizon and the flux trajectory needs to be provided, which is not the case with real-time CB-PWM. The PWM approach has inferior voltage quality than OPPs. Conventional common-mode voltage injection has difficulties to control the NP potential if the converter operates in an operating point with reactive power only, i.e., zero power factor.

- MP3C with gamma-flux NP balancing approach. This approach is compatible with MP3C and was proposed in the past, but had some drawbacks as it avoided re-computation of the flux trajectory. Consequently, intended NP balancing effect was not reliably achieved. Furthermore, it would not be easy to extend the method to 3L(A)NPC+AF as the gamma flux would need to affect the pulses of the main converter only.

- Redundant vector selection approach to control the NP. This approach is compatible with MP3C, however it is based on tolerance bands and leads to repetitive drifting of the NP potential. Consequently, the output voltage quality is reduced.

- Redundant OPP approach to control the NP is described in "Neutral-point balancing using optimized pulse patterns", G. Darivianakis, E.R. Rohr, T. Geyer, and F. Kieferndorf, ABB Technical Report, 16.3.2021. This approach is compatible with MP3C, however in its basic form, it is based on tolerance bands and leads to repetitive drifting of the NP potential. Consequently, the output voltage quality is reduced.

- Redundant OPP approach with interpolation to control the NP is described in "Neutral-point balancing using optimized pulse patterns. A novel concept based on continuous angle modifications", G. Darivianakis, ABB Technical Report, 18.3.2021. This approach is compatible with MP3C and introduces controllability with a linear character, avoiding the usage of tolerance bands. However, the approach has been developed for 3L(A)NPC only, without considering the active filter. It is expected that the extension of the approach to work also with an active filter is rather complex.

The not-yet disclosed European patent application EP 22 183 835.2 describes a model predictive control for an electrical converter with active filter cells based on offline-computed optimized pulse patterns and online cell balancing, and is incorporated herein in its entirety by reference.

DESCRIPTION OF THE INVENTION

It is an objective of the invention to improve the control of an electrical converter including active filter cells. Another objective of the invention is to improve an output voltage quality of the electrical converter.

These objectives are achieved by the subject-matter of the independent claims. Further exemplary embodiments are evident from the dependent claims and the following description.

An aspect of the invention relates to a method for controlling an electrical converter. the electrical converter comprising a main stage adapted for converting a DC voltage into an intermediate voltage having at least two voltage levels and a filter cell stage with a filter cell for each phase of the main stage, with the main stage comprising a DC link and with each filter cell being adapted for adding or subtracting a cell voltage of the filter cell to the intermediate voltage, the method comprising the steps of: determining a first optimized pulse pattern for the main stage and a second optimized pulse pattern for the filter cells from an offline-computed optimized pulse pattern, wherein the first optimized pulse pattern comprises switching instants for the main stage over a next computation window and wherein the second optimized pulse pattern comprises switching instants for filter cells over the next computation window; determining a neutral point potential depending on a measured lower DC link voltage and a measured upper DC link voltage of the DC link; determining a first balancing signal for the main stage depending on the determined neutral point potential; determining a second balancing signal for the filter cells depending on measured cell voltages of the filter cells; determining a first differential mode voltage from the first balancing signal; determining a second differential mode voltage from the second balancing signal; determining a first voltage change from the first balancing signal and the second differential mode voltage; determining a second voltage change from the second balancing signal and the first differential mode voltage; adjusting the first optimized pulse pattern by moving its switching instants depending on the first voltage change over the next computation window and adjusting the second optimized pulse pattern by moving its switching instants depending on the second voltage change over the next computation window; determining a reference flux trajectory over the next computation window depending on the adjusted first and second optimized pulse pattern; and controlling the electrical converter depending on the reference flux trajectory and on the adjusted first and second optimized pulse pattern.

Another aspect of the invention relates to a computer program for controlling the electrical converter, which, when being executed by a processor, is adapted to carry out the steps of the method as described above and in the following.

Another aspect of the invention relates to a computer-readable medium, in which the computer program is stored.

Another aspect of the invention relates to a controller for controlling the electrical converter adapted for performing the method as described above and in the following. The controller comprises a pattern determination controller for performing steps of a pattern determination part of the method, and a model predictive controller for performing the steps of a model predictive control part of the method. The controller may comprise one or more processors, in which the method is run as software. It also may be that the method is at least partially or completely implemented in hardware, such as a DSP or FPGA. It may be that the pattern determination controller has a processor and that the pattern determination part is executed on this processor. The pattern determination part may be stored in a memory of the pattern determination controller. It also may be that the model predictive controller has a processor and that the model predictive control part is executed on this processor. The model predictive control part may be stored in a memory of the model predictive controller.

Another aspect of the invention relates to the electrical converter. The electrical converter comprises: the main stage having the DC link and being adapted for converting the DC voltage into the intermediate voltage having the at least two voltage levels; the filter cell stage with the filter cell for each phase of the main stage, with each filter cell being adapted for adding or subtracting the cell voltage of the filter cell to the intermediate voltage; and the controller as described above and in the following.

Features, embodiments, and/or advantages of the method as described above and in the following may be features, embodiments, and/or, respectively, advantages of the computer program, the computer-readable medium, the controller and the electrical converter as described above and in the following, and vice versa.

The electrical converter may be a medium or high voltage converter adapted for processing voltages up to 6.6kV or more. The method may provide an algorithm for operation of the electrical converter at medium to nominal fundamental frequency of a motor or any other physical system that acts as the load of the electrical converter. The main stage may comprise one or more NPC half-bridges, which are connected in parallel to the DC link. The output of the half-bridges may be the intermediate voltage, which may be a multi-phase, in particular three-phase voltage. Dependent on the topology of the main stage, the output voltage may have two, three, five or more voltage levels. In the case of 3L(A)NPC half-bridges, there may be three output voltage levels. Each filter cell of the filter cell stage may comprise a cell capacitor providing the cell voltage, which is connected in parallel with two half-bridges providing an input and an output of the filter cell. The filter cell stage may be seen as an active filter of the electrical converter. The filter cells may be active filter cells and may be referred to as AF in the following.

To overcome the shortcomings outlined above, a linear Neutral Point (NP) potential control solution which is compatible with existing OPP-MP3C control concept was developed and is presented in this description. In particular, this description provides an algorithm for operation of MC + AF, including balancing of the AF cell voltages and the NP potential of the main stage, in other words Main Converter (MC), at mid to nominal speeds. The control solution is capable to control the NP potential to its equilibrium without using tolerance bands and works in all operating conditions, including operation with a power factor of zero. Consequently, the output voltage quality is greatly improved.

The algorithm is compatible with model predictive pulse pattern control using offline computed OPPs. It computes the nominal pulse patterns for the MC and the AF online repeatedly for the upcoming calculation window by generating the three-phase Optimized Pulse Pattern (OPP) from the off-line generated single-phase OPP. Subsequently, the nominal pulse pattern of the main converter and the AF are modified to achieve AF cell voltage balancing and NP potential balancing. The AF is used to clean up distortions generated by the main converter pattern that has been manipulated for NP balancing. Thus, the output current is kept sinusoidal and the intended NP balancing effect is achieved. Then, based on the modified pulse patterns, the accurate flux reference trajectory is precomputed for the calculation window. Finally, the modified pulse patterns and the flux reference trajectory may be written into look-up tables and passed to the MP3C core algorithm. The MP3C core algorithm ensures closed loop control by tracking of the provided flux reference trajectory with online-modifications of the provided pulse pattern. It may be compatible with a wide range of ratios between AF voltage and MC half dc-link voltage, especially also covering low ratios ~20%, which is important for the 6kV drive lineup in Bridge.

Online loading of the optimized pulse patterns, an AF balancer, an NP balancer, pattern adjustment, and the flux reference trajectory can be executed with a reduced update frequency, i.e. with a long time period. It can be aligned e.g. with a computation window equivalent to 60° of the fundamental period. Due to the low update frequency of the algorithm, sufficient time should be available for computations, i.e. the computational burden is relaxed. Execution of the core MP3C algorithm is independent and typically needs a higher update frequency for closed-loop control.

The typical configuration of 3L(A)NPC + AF foresees a rather low cell voltage of the AF, typically 1/3 of half the dc-link voltage of the main converter. However, for the 6kV drive lineup in Bridge, the ratio could be even lower, e.g. $V_{cell}$= 1/5 * $V_{dc}$/2. The offline generated patterns are done such that the fundamental component of the AF is zero and that the average current to the neutral point of the main converter is zero. Nevertheless, it is possible that due to transients or harmonics, both the AF cell voltage and the NP potential can drift. It is required to introduce a method to control both quantities to their nominal values. The approach is based on online manipulation of the original OPP over a fixed computation window, e.g. 60°, to achieved the required balancing effect of the AF cell voltage and the NP potential. The method ensures no change in the combined output voltage average of the 3L(A)NPC and the AF over the computation window, i.e., the flux trajectory computed with the modified pulse pattern will return to the original flux trajectory after the 60° computation window. Consequently, drifting of the flux trajectory because of open-loop integration is avoided. For this, a time-domain based average adjust algorithm has been implemented that enforces an arbitrary average of the MC output voltage and AF output voltage over a given computation period.

When the modified pulse patterns of the MC and the AF are available for the next computation window, they can be transferred to the MP3C core algorithm. However, if the nominal stored flux trajectory is used as a reference for the MP3C core, there may be a risk that the MP3C core moves the original pulse pattern and overwrites any changes made for AF voltage and NP potential balancing purposes. Therefore, it may be required to precompute the accurate flux trajectory using the previously online computed pulse pattern. Pre-calculation of the modified flux trajectory can easily be accomplished using the nominal flux trajectory as the initial point and so can be done with low computational burden.

This not only ensures that the cell voltage balancing algorithm works as intended, but also simplifies balancing of the main converter NP potential.

Compared to the above other approaches that are used to control the MC + AF, the proposed method has the following key advantages

- It is compatible with the MP3C core control algorithm as well as being aligned with the known low-speed flux trajectory and pulse pattern generation methods. Consequently, only one control scheme is required for low and nominal speed operation and no complicated switch-over logic is necessary.

- The method incorporates a time-domain based AF voltage balancing and NP potential balancing approach, i.e., it works also at zero power factor.

- The algorithm can be calculated with a reduced update frequency. If a fundamental frequency range of 20-60 Hz is assumed, this corresponds to an update rate of 8.3-2.8ms or a maximum update frequency of about 360Hz, the algorithm can run as a background task, leaving enough computational resources for other fast control blocks, such as the MP3C core.

- Each phase active filter cell voltage can be independently balanced.

- The method can easily handle the synchronized pulses between MC and AF required for voltage step reduction.

- An online flux trajectory can easily be computed using the off-line calculated flux trajectory as an initial condition for each computation window resulting in similar computational simplicity to CB-MP3C

When a fundamental flux reference is outside an angle range provided by the reference flux trajectory, the flux error may be determined from a difference between the estimated flux of the electrical converter and a circular flux trajectory.

The computation window may be a fixed range of angles with respect to the offline-computed optimized pulse pattern. The computation window may be a time period corresponding to at least 1/6 of a fundamental period of a reference output voltage of the electrical converter.

The adjusted first and second optimized pulse patterns and the flux reference trajectory may be stored in a look-up table, in particular for the next two computation windows.

A switching instant indicates a time point and/or transition time and switch positions to be switched to at the time point. In other words, the following data may be stored in a pulse pattern for each switching instant, i.e. for each transition: a transition angle, final position at end of transition and change in position at transition.

In general, the optimized pulse pattern or, respectively, the corresponding first or main pulse pattern, and second or cell pulse pattern may be multi-phase quantities, i.e. there may be different switching instants for every phase of the intermediate voltage. The optimized pulse pattern may be provided as a multi-phase pulse pattern from the outset. Otherwise, i.e. if the optimized pulse pattern is provided as a single-phase pulse pattern, it may be partitioned into separate phases such as to obtain a multi-phase pulse pattern, in order to carry out the adjustments for each phase of the intermediate voltage separately.

According to an embodiment, the offline-computed optimized pulse pattern are selected and read from a database, and the first optimized pulse pattern and the second optimized pulse pattern are determined from the offline-computed optimized pulse pattern by decomposing the optimized pulse pattern into the first optimized pulse pattern and the second optimized pulse pattern. The selected optimized pulse pattern may be a total optimized pulse pattern comprising cumulative switching instants for the main stage and the filter cells. The selected optimized pulse pattern may be parsed into a main pulse pattern for the main stage, i.e. the first optimized pulse pattern, and a cell pulse pattern for the filter cell, i.e. the second optimized pulse pattern, of the respective phase, prior to carrying out the adjustments.

According to an embodiment, the neutral point potential is determined depending on the measured lower DC link voltage and the measured upper DC link voltage by subtracting the measured upper DC link voltage from the measured lower DC link voltage and by dividing the result by two.

According to an embodiment, the second balancing signal is determined depending on the determined neutral point potential by determining an intermediate balancing signal from the determined neutral point potential and a reference neutral point potential, and by setting the second balancing signal to the intermediate balancing signal, to the inverted intermediate balancing signal, or to zero depending on an output voltage of the corresponding phase of the main stage at a corresponding switching transition within the computation window. The reference neutral point potential may be set to zero.

According to an embodiment, the second balancing signal is set to the inverted intermediate balancing signal, if the output voltage is zero or more, the second balancing signal is set to the intermediate balancing signal, if the output voltage is zero or less, and the second balancing signal is set to zero, if there are no switching transitions within the computation window. The inverted intermediate balancing signal is the negative intermediate balancing signal. In case of the output voltage being zero, the skilled person may choose depending on the specific application whether to set the second balancing signal to the intermediate balancing signal or to the inverted intermediate balancing signal.

According to an embodiment, the intermediate balancing signal may be determined from the determined neutral point potential and the reference neutral point potential by filtering the neutral point potential, by subtracting the filtered neutral point potential from the reference neutral point potential, by multiplying the corresponding difference with a sign of the current in the corresponding phase, and by controlling the corresponding product with a P- or PI-controller. The neutral point potential may be filtered with a low-pass filter. The control via the P- or PI-controller may correspond to a multiplication with a corresponding transfer function.

According to an embodiment, the first voltage change is determined from the first balancing signal and the second differential mode voltage by subtracting the second differential mode voltage from the first balancing signal, and/or the second voltage change is determined from the second balancing signal and the first differential mode voltage by subtracting the first differential mode voltage from the second balancing signal.

According to an embodiment, the method comprises a pattern determination part carrying out the steps from the determining of the first and second optimized pulse pattern to the adjusting of the first and second optimized pulse pattern. It may be determined whether a flux reference angle is within the computation window. If the flux reference angle leaves the computation window, a trigger signal may be generated, and the pattern determination part of the method may be triggered by said trigger signal. The steps of the pattern determination part may be performed by a pattern determination controller.

According to an embodiment, the method comprises a model predictive control part carrying out the steps from determining of the reference flux trajectory to the controlling of the electrical converter, wherein these steps are performed several times during the next computation window. The steps of the model predictive control part may be performed by a model predictive controller, which may have a faster execution speed than the pattern determination controller.

The model predictive control part as well as the model predictive control may be performed like described in EP 2 469 692 A1, which is incorporated by reference. Also, in the chapter "pattern controller" of EP 3 729 637 A1, which is incorporated by reference, model predictive control of pulse patterns created based on pulse width modulation is described.

The model predictive method tries to optimize a control objective, which may be modelled with an objective function. The objective function is a function depending on parameters and quantities determined from the adjusted optimized pulse pattern with time-shifted switching instants. Pulse pattern switching instants are time-shifted in order to minimize the objective function.

The objective function is modelled to minimize a flux error between an estimated flux of the electrical converter and the reference flux trajectory. The actual, estimated flux may be determined from measurements in the electrical converter.

When the adjusted pulse patterns have been optimized in this manner, at least a next switching instant is applied to the electrical converter, i.e. the main stage and/or the filter cell stage. This is done by switching the switches of the main stage and/or the filter cell stage to a position as demanded by the switching instant.

The model predictive control part can be repeated several times with the same pulse patterns and reference flux trajectory as determined in the pattern determination part. The same adjusted pulse patterns, e.g. the same main pulse pattern and the same cell pulse pattern, as determined by the pattern determination part may be again used in the model predictive control part at a later time instant, for again calculating the next switching instant.

The model predictive control part may be performed much more often, meaning with a higher execution frequency, than the pattern determination part. In the pattern determination part, the adjusted optimized pulse pattern or the two adjusted pulse patterns for the main stage and the cell stage are provided, for example as a look-up table, so as to be used in the model predictive control part as input for the optimizer, which shifts the transition times, several times.

The model predictive control part may select an appropriate offline-computed OPP based on outer control loops which, for example, may generate a required modulation index and flux reference angle. To account for field weakening, the flux reference amplitude may need to be scaled further.

According to an embodiment, the reference flux trajectory is determined depending on the adjusted first and second optimized pulse pattern by recombining the first and second optimized pulse pattern and by determining the reference flux trajectory from the recombined first and second optimized pulse pattern. The recombined first and second optimized pulse pattern may be referred to as modified 3-phase pattern.

According to an embodiment, the next computation window has a predetermined width.

To avoid that the model predictive control part modifies the adjusted optimized pulse pattern such that a balancing of the filter cells is destroyed, the reference flux trajectory may be determined over the next computation window from the adjusted optimized pulse pattern. This may not only ensure that a cell voltage balancing algorithm works as intended, but also simplify balancing of the neutral point potential of the main stage.

Therefore, the pattern determination part may further comprise determining the reference flux trajectory over the next computation window from the adjusted optimized pulse pattern. This may be done by integrating the output voltage as indicated by the total adjusted optimized pulse pattern or, as the case may be, by integrating the sum of the output voltage of the main stage as indicated by the adjusted main pulse pattern and the output voltage of the filter cell stage as indicated by the adjusted cell pulse pattern.

The reference flux trajectory may be a vector quantity, for example with a component of each phase or a vector quantity in the orthogonal reference frame described with two components (referred to as alpha-beta components in the following).

The reference flux trajectory may be determined for a specific angle range, which corresponds to the next computation window. The usage of the reference flux trajectory may be beneficial, because it includes a flux ripple and therefore matches with the adjusted pulse patterns. Consequently, without outer disturbances, the adjusted pulse patterns are applied without modifications.

It also may be possible to directly use a circular flux trajectory as reference flux trajectory. However, in this case the pattern switching instants may be modified by the model predictive controller to better match a circle and therefore may overwrite the adjustments and may disturb the cell balancing goal.

If the offline-computed optimized pulse pattern contains a nominal flux trajectory which is also calculated offline, as typically will be the case, the initial flux trajectory angle and alpha-beta components can be interpolated easily and used as the starting point for an accurate calculation of the ripple in the reference flux trajectory using a simple piecewise integration of the adjusted optimized pulse pattern. The newly generated reference flux trajectory corner points may consist of unique angles in the $\alpha\beta$-plane plus the flux $\alpha\beta$-components over the computation window. In the case where neutral point balancing is also taken into account as described further below, the nominal flux trajectory may, for example, be only used as the initial condition every second or third update. Otherwise, the endpoint of the previously calculated flux trajectory segment may be used as the starting point for the next computation window. This may ensure that the neutral point balancing adjustment occurs over 120° or 180°.

A computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a non-transitory or transitory medium.

These and other aspects of the invention will be apparent from and elucidated with reference to the embodiments described hereinafter.

BRIEF DESCRIPTION OF THE DRAWINGS

The subject-matter of the invention will be explained in more detail in the following text with reference to exemplary embodiments which are illustrated in the attached drawings.

Fig. 1 shows a schematic circuit diagram of an electrical converter according to an embodiment of the invention.

Fig. 2 shows a schematic block diagram of a controller according to an embodiment of the invention.

Figs. 3 shows a diagram of a first example of an adjustment of an optimized pulse pattern, according to an embodiment of the invention.

Fig. 4 shows a diagram of a second example of an adjustment of an optimized pulse pattern, according to an embodiment of the invention.

Fig. 5 shows a diagram of a third example of an adjustment of an optimized pulse pattern.

Fig. 6 shows a diagram of a third example of an adjustment of an optimized pulse pattern, according to an embodiment of the invention.

In principle, identical parts are provided with the same reference symbols in the figures.

DETAILED DESCRIPTION OF EXEMPLARY EMBODIMENTS

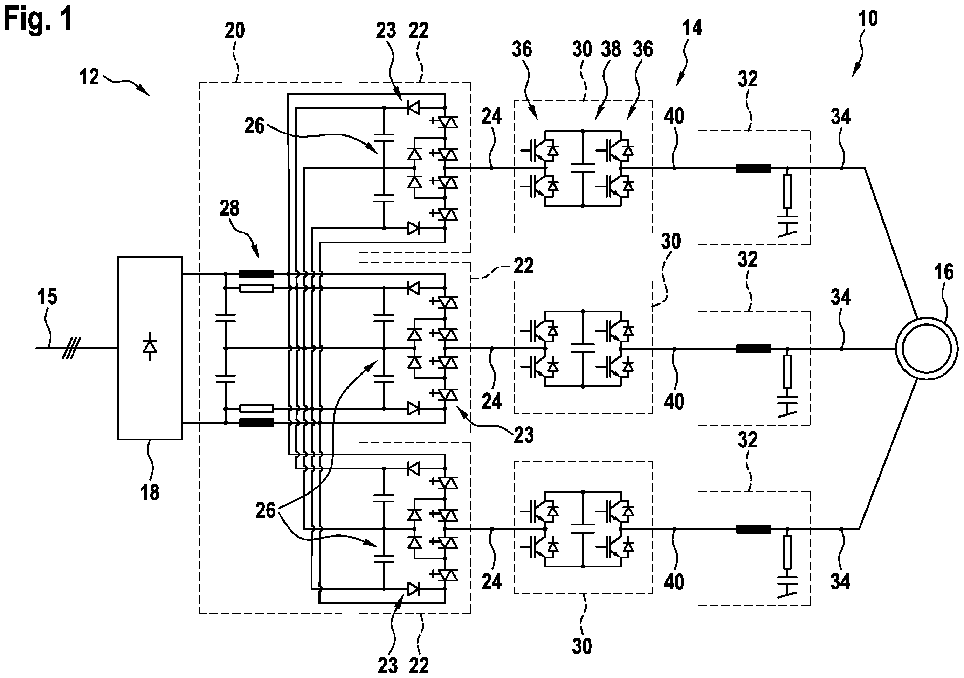

Fig. 1 shows an electrical converter 10 with a main stage 12 and a filter cell stage 14. The electrical converter 10 is adapted for transforming a first AC voltage provided by a power grid 15 into an output voltage to be supplied to an electrical load 16.

The main stage 12 comprises a rectifier 18, which may be a passive diode rectifier and which is adapted for converting the AC voltage from the power grid 15 into a DC voltage, which is supplied to a DC link 20. The DC link 20 may be a split DC link.

Furthermore, the main stage 12 comprises three output converters 22, each of which is adapted for transforming the DC voltage in the DC link 20 into a phase of an intermediate voltage that is provided at outputs 24 of the main stage 12. The output converters 22 are connected in parallel to the DC link 20, for example via clamp inductors and/or resistors 28 or directly. Each of the output converters 22 may comprise a clamp circuit which is composed of the clamp inductors and/or resistors 28 together with the clamp capacitors 26.

Each of the output converters 22 may comprise, as shown, a 3-level neutral point clamped (3LNPC) half-bridge 23, which may be based on IGCTs, but other topologies and semiconductor types are possible. The 3LNPC half-bridges 23 also may be ANPC half-bridges. Also, for the overall main stage 12, other topologies are possible. In general, the main stage 12 may be adapted to provide a two- or multi-level intermediate voltage at the outputs 24, optionally with more than one phase. The 3LNPC half-bridge 23 as shown in Fig. 1 is adapted for generating three different voltage levels for the respective phase of the intermediate voltage.

The clamp inductors and/or resistors 28 together with the clamp capacitors 26 provide an IGCT di/dt clamp circuit. In the case of other types of semiconductor switches, such as IGBTs, the clamp circuit may be omitted. The clamp circuits 26 may be used for controlling a device voltage during switching.

For every phase of the main stage 12, the filter cell stage 14 comprises a filter cell 30, which may be seen as an active filter, and optionally a passive output filter 32, which are connected in series between the respective output 24 of the main stage 12 and an output 34 of the electrical converter 10. It may be possible that in one or more of the phases more than one filter cell 30 is connected in series and/or in parallel between the output 24 of the main stage 12 and the output 34 of the electrical converter 10. Each of the passive filters 32 may comprise inductors, resistors and/or capacitors.

Every filter cell 30 comprises two filter cell half-bridges 36, which are connected in parallel with a cell capacitor 38. A first midpoint of one of the filter cell half-bridges 36 is connected to the output 24 of the main stage 12. A second midpoint of the other half-bridge 36 provides an output 40 of the filter cell 30 and is connected via the optional passive filter 32 with the respective output 34 of the electrical converter 10.

Instead of the passive filter 32 also a dv/dt filter may be employed.

The filter cells 30 comprise three different switching states, that may be reached by switching their semiconductor switches accordingly (two per half-bridge), which, for example, may be IGBTs. In a first switching state, the filter cell 30 directly connects the output 24 with the output 40 of the corresponding filter cell 30. Here there may be two redundant states: both upper switches on or both lower switches on. Normally the two redundant states are alternated in the switching cycle. In a second switching state, the converter cell 30 connects the cell capacitor 38 between the outputs 24, 40 such that the cell capacitor voltage of the cell capacitor 38 is added to the intermediate voltage provided at the output 24. In a third switching state, the filter cell 30 connects the cell capacitor 38 between the outputs 24, 40 such that the cell capacitor voltage of the cell capacitor 38 is subtracted from the intermediate voltage provided at the output 24. In such a way, the intermediate voltage from the main stage 12, which usually is shaped like a step-function due to the finite number of levels of the main stage, may be converted into a voltage (i.e. the output voltage) which better approximates a sinusoidal and/or continuous output voltage reference.

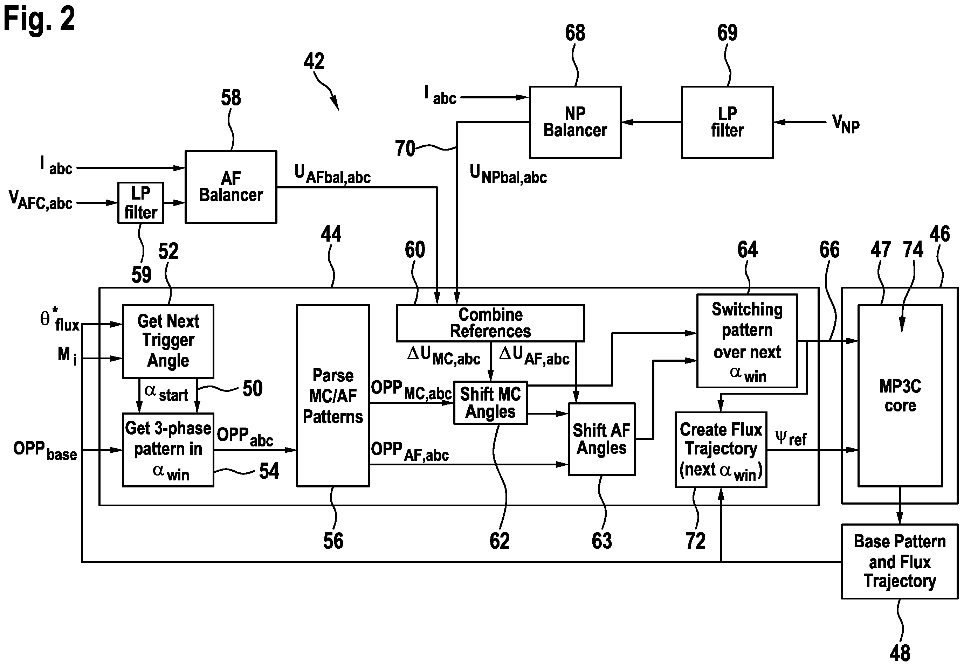

Fig. 2 shows a block diagram for a controller 42, which is composed of a pattern determination controller 44 and a model predictive controller 46. With the controller 42, the electrical converter 10 of Fig. 1 may be controlled. The blocks of the controller 42 may also indicate method steps of a control method performed by the controller 42, as described with respect to figure 7. The block of the pattern determination controller 44 also may be seen as the pattern determination part 44 of the control method. The block of the model predictive controller 46 also may be seen as the model predictive control part 46 of the method.

The pattern determination part 44 may be executed with a time period equal to 60° of the fundamental frequency of the main stage 12 (MC) of the electrical converter 10. If the main stage fundamental frequency range is 25 - 60 Hz, the execution period would be 6.7 ms - 2.8 ms.

The method is based on optimized pulse patterns OPP$_{base}$ which are generated offline in advance and saved in a database, from which they can be selected and read to be further adjusted and modified online in the pattern determination part 44 and the model predictive control part 46 of the method. For example, an MP3C (model predictive pulse pattern control) core 47 of the model predictive controller 46 may select an appropriate optimized pulse pattern OPP$_{base}$, with a required modulation index M$_i$ and flux reference angle $\theta_{flux}^*$ as determined in block 48. To account for field weakening, the flux reference amplitude may need to be scaled further.

Based on the flux reference angle $\theta_{flux}^*$ and the modulation index M$_i$ provided by the outer loop controllers as well as an angle value representing the delay until the next control cycle, a trigger signal 50 is generated in next trigger block 52 of the pattern determination part 44. If the trigger signal 50 is true (meaning "update is needed"), a 3-phase set of nominal pulse patterns OPP$_{abc}$, which are directly calculated (see below) from the original single-phase optimized pulse pattern OPP$_{base}$, will be updated as described herein in the pattern determination part 44 for the next computation window $\alpha_{win}$. A suitable offset angle of the computation window $\alpha_{win}$ within the fundamental period may also be determined by the modulation index M$_i$, and from this it is determined if the flux reference angle $\theta_{flux}^*$ is still within the current window $\alpha_{win}$ or will leave the window within the next controller cycle. If it is not, an update is required.

This may also take into account any delays in a microcontroller, so that the pattern for the next computation window $\alpha_{win}$ is always available. Furthermore, this may also include double-buffering of the pulse pattern, i.e. providing pulse patterns by the pattern determination part 44 for the next two computation windows $\alpha_{win}$, so that a next pattern can always be switched to if necessary. This ensures that there is always a pattern available to feed into an MP3C (model predictive pulse pattern control) core 47 of the model predictive controller 46.

If an update is required, i.e. if the trigger signal 50 generated in next trigger block 52 is true, the currently available single-phase OPP$_{base}$ selected by the MP3C core 47 is read and shifted appropriately in a pattern in window block 54 to generate the three phases A, B, C of the intermediate voltage over the next computation window $\alpha_{win}$. The new three-phase pattern OPP$_{abc}$ is then parsed in a parse block 56 into a first pulse pattern OPP$_{MCabc}$, which may be referred to as main pulse pattern, for the main stage 12 (also denoted as Main Converter, or MC) and a second pulse pattern OPP$_{AFabc}$, which may be referred to as cell pulse pattern, for the filter cell stage 14.

The first pulse pattern OPP$_{MCabc}$ and the second pulse pattern OPP$_{AFabc}$ comprise switching instants for the main stage 12 or, respectively, for the filter cell stage 14 for the next computation window $\alpha_{win}$. This may include main stage angles $\alpha_{AF}$ and filter stage angles $\alpha_{MC}$ along with corresponding switch positions U$_{MC}$ and U$_{AF}$ and change in switch positions $\Delta$U$_{AF}$, $\Delta$U$_{MC}$. The first angle is always zero and the last angle is always the length of the window $\alpha_{win}$. The switching angles may be normalized by subtracting a starting angle $\alpha_{start}$ of the computation window $\alpha_{win}$ and taking care that the crossing over from 360° to 0° is accounted for. A flag may also be generated for each filter stage angle $\alpha_{AF}$ which is synchronized with a main stage angle $\alpha_{MC}$, which can be done to reduce the combined voltage step by switching with a double step size in the opposite direction.

To achieve cell balancing of filter cells 30, an active filter (AF) cell voltage balancer 58 is run. In the AF balancer 58, cell capacitor voltages V$_{AFC,abc}$ of the filter cells 30 in the three phases are measured individually (i.e. each phase separately) and optionally processed with one or more first low-pass (moving average) filters 59. The differences obtained by subtracting a predetermined cell reference capacitor voltage may be processed with P- or PI controllers (not shown). The output signals can be interpreted as non-zero difference voltage references which may be referred to as second balancing signal U$_{AFbal,abc}$ and that need to be injected by the (active) filter cells 30 in order to accumulate charge in the respective cell capacitor 38 and consequently charge or discharge the cell capacitor 38. If the cell voltage V$_{AFC,abc}$ matches the reference voltage, the average voltage created by the filter cell 30 over one computation window $\alpha_{win}$ should be unchanged since the OPPs are generated such that the fundamental component of the second pulse pattern OPP$_{AF,abc}$ is zero. The fundamental component power is provided only by the main stage 12.

In the AF balancer 58, the signs of the phase currents I$_{abc}$ need to be accounted for such that the difference voltage command for the filter cell 30 drives the cell voltage in the correct direction, i.e., the PI controller outputs are multiplied with the sign of the corresponding phase current I$_{abc}$. To compensate for delays in the current measurement and to avoid applying the wrong sign over the computation period, the phase angle of the fundamental current relative to the flux reference angle $\theta_{flux}^*$ can be used as a reference from which the current sign can be advanced so that the correct sign is applied over the upcoming computation window $\alpha_{win}$.

To achieve main stage balancing of the main stage 12, a neutral point (NP) balancer 68 is run. A difference between an upper DC link voltage V$_{top}$ and a lower DC link voltage V$_{bot}$ may be determined and optionally processed with a second low-pass (or moving average) filter 69. The difference compared to a reference neutral point potential V$_{NP,ref}$ (nominally zero) may be processed with a P- or PI controller (not shown). The output signal is multiplexed and multiplied with the sign of each phase current I$_{abc}$ to create three balancing signals S$_{NPbal,abc}$ which can be interpreted as desired increase or decrease of the total duration of the time periods in which the main converter output voltage is connected to the zero level (i.e., to the NP rail) over the corresponding computation window. The corresponding change in zero states would lead to a corresponding NP current to drive the NP potential in the desired direction. Furthermore, the change in zero states would lead to a corresponding change of main converter average output voltage U$_{NPbal,abc}$ over the computation window in the respective phase.

A corresponding change in differential mode (DM) voltages commanded by the AF and the NP balancer 58, 68 need to be compensated by the respective other part of the electrical converter 10, i.e., a first differential mode voltage U$_{NPbal,DM,abc}$ of the first balancing signal U$_{NPbal,abc}$ needs to be compensated by the filter cells 30 and a second differential mode voltage U$_{AFbal,DM,abc}$ of the second balancing signal U$_{AFbal,abc}$ needs to be compensated by the main converter 12, and in order to not disturb the total output voltage and to ensure that the provided total differential mode volt-seconds over a computation window is unchanged, and consequently to ensure that the flux trajectory returns to the original trajectory after the computation window. To achieve this, the first and second balancing signals $U_{NPbal,abc}$, $U_{AFbal,abc}$ are combined in a combine references block 60, e.g. according to the superposition rule. The first differential mode voltage $U_{NPbal,DM,abc}$ of the first balancing signal $U_{NPbal,abc}$ is computed. The second differential mode voltage $U_{AFbal,DM,abc}$ of the second balancing signal $U_{AFbal,abc}$ is computed. Then, the second differential mode voltage $U_{AFbal,DM,abc}$ is subtracted from the first balancing signal $U_{NPbal,abc}$ to obtain a first voltage change $\Delta U_{MC,abc}$, and the first differential mode voltage $U_{NPbal,DM,abc}$ is subtracted from the second balancing signal $U_{AFbal,abc}$ to obtain a second voltage change $\Delta U_{AF,abc}$.

The desired first and second voltage changes $\Delta U_{MC,abc}$, $\Delta U_{AF,abc}$ of average voltages over the computation window $\alpha_{win}$ for the main converter 12 and, respectively, for the filter cell stage 14 are impressed by manipulating (moving forward or backward) the switching angles of the first optimized pulse pattern $OPP_{MCabc}$ in a shift MC angles block 62 and by manipulating (moving forward or backward) the switching angles of the second optimized pulse pattern $OPP_{AF,abc}$ in a shift AF angles block 63, each within the computation window $\alpha_{win}$. The corresponding pulse shifting algorithms are described below with respect to the details of the shift MC angles block 62 and the shift AF angles block 63. In these algorithms, several special cases, e.g. synchronized pulses (switching angles of MC and AF which are equal and need to stay equal to reduce total voltage step) or cases where the MC only has movable switching angles in two out of three phases in the corresponding computation window $\alpha_{win}$ may be considered. In the former case, moving of MC (or AF) angles is done first and the corresponding error introduced due to synchronized angles is then compensated in addition when moving the AF (or MC) angles. In the case of having only movable switching angles in two out of three phases, the required DM voltage is distributed to the two phases with a corresponding transformation.

In an switching pattern block 64, the adjusted first and second optimized pulse pattern $OPP_{MCabc}$, $OPP_{AF,abc}$ may be recombined. The recombined first and second optimized pulse pattern $OPP_{MCabc}$, $OPP_{AF,abc}$ may be referred to as adjusted optimized pulse pattern 66, e.g. as modified 3-phase pattern.

In a create flux trajectory block 72, a new, i. e. updated reference flux trajectory $\Psi_{ref}$ over the computation window $\alpha_{win}$ is then computed based on the modified angles according to the total adjusted optimized pulse pattern 66. Fortunately, the offline-calculated $OPP_{base}$ typically contains a nominal flux trajectory which is also calculated offline. Therefore, as described in more detail further below, an initial flux trajectory angle and alpha-beta components $\Psi_{nominal,\alpha\beta}$ can be interpolated easily and used as the starting point for an accurate calculation of the ripple in the reference flux trajectory $\Psi_{ref}$ using a simple piecewise integration of the total adjusted optimized pulse pattern 66. The newly generated reference flux trajectory corner points consist of the unique angles in the $\alpha\beta$-plane plus the flux $\alpha\beta$-components over the computation window $\alpha_{win}$. In the case where NP balancing is also taken into account, the nominal flux trajectory $\Psi_{nominal}$ is only used as the initial condition every second or third update. Otherwise, the endpoint of the previously calculated flux trajectory segment is used as the starting point for the next computation window $\alpha_{win}$. This ensures that the NP balancing adjustment occurs over 120° or 180°.

The updated 3-phase pulse pattern 66 and the newly generated reference flux trajectory $\Psi_{ref}$ are stored as lookup tables. Thereby, they are made available for the model predictive controller 46 for use in the next computation window $\alpha_{win}$.

It is also possible that the pattern determination controller 44 calculates the total adjusted optimized pulse pattern 66 and the flux reference trajectory 76 for the next two computation windows $\alpha_{win}$ and stores them, e.g. in the lookup tables. This may simplify an implementation on a microcontroller because the method may be run in a lower-priority interrupt and may compute the adjusted optimized pulse pattern 66 for the over-next computation windows $\alpha_{win}$ while the model predictive controller 46 works on the active computation windows $\alpha_{win}$ that has been computed previously.

In the model predictive control part 46 of the method, the core 47 of the model predictive controller 46 executes the adjusted optimized pulse pattern 66 and controls the stator flux to follow the reference flux trajectory $\Psi_{ref}$. For this, the core 47 reads the adjusted optimized pulse pattern 66 and the reference flux trajectory $\Psi_{ref}$ from the look-up tables and receives an estimated flux 74, which is calculated from measurements in the electrical converter 10.

The model predictive control part as well as the model predictive control may be performed like in EP 2 469 692 A1, which is incorporated by reference.

In general, the tasks and/or method steps of the model predictive control part are performed several times during the computation window $\alpha_{win}$.

In the model predictive control part 46, the adjusted optimized pulse pattern 66 received from the pattern determination controller 44 may be further modified by moving at least one transition time and/or time point of a switching instant, such that a flux error determined from a difference between the estimated flux 74 of the electrical converter 10 and the reference flux trajectory $\Psi_{ref}$ can be minimized. To this end, an objective function is used, into which the transition times and/or time points of the switching instants are input.

At least a next switching instant from this modified pulse pattern may then be applied to the electrical converter 10. This means that the switches of the main stage 12 and the filter cell stage 14 are switched at the transition time of the next switching instant to the switching position as indicated by the next switching instant.

In case there is a torque step or any other disturbance that leads to a stator flux reference angle which is outside of the angle range corresponding to the precomputed computation window $\alpha_{win}$, the flux reference trajectory $\Psi_{ref}$ is skipped

and a circular flux reference trajectory at the stator flux reference angle is used instead.

In the following, possible embodiments of the blocks of Fig. 2 are described in more detail.

Trigger signal generator 52

The trigger signal generator 52 may create a trigger signal 50 for modification of the offline-computed optimized pulse pattern $OPP_{base}$ for the upcoming computation window $\alpha_{win}$ (e.g. of length 60°). This trigger signal 50 may be issued every e.g. 60°. The starting and ending points of the computation windows may be selected/aligned such that switching events of the main stage 12 in at least two out of three phases are present within a computation window $\alpha_{win}$. Further details of the trigger signal generator 52 are described in the "Trigger signal generator 52" section of the not-yet disclosed European patent application EP 22 183 835.2.

Multiple-phase pattern generator 54

The multiple-phase pattern generator 54 may read the original offline-computed optimized pulse pattern $OPP_{base}$ currently selected by the MP3C core algorithm (depending on the modulation index $M_i$) and may extract the part corresponding to the upcoming computation window $\alpha_{win}$. The patterns for the three phases are reconstructed out of the single-phase pattern, in case the original offline-computed optimized pulse pattern $OPP_{base}$ is stored as a single phase pattern only. Further details of the multiple-phase pattern generator 54 are described in the "Multiple-phase pattern generator 54" section of the not-yet disclosed European patent application EP 22 183 835.2.

Parse block 56

In the parse block 56, the offline-computed optimized pulse pattern $OPP_{base}$ is parsed into the first or main pulse pattern $OPP_{MCabc}$ for the main stage 12 (also denoted as MC, or main converter) and the second or cell pulse pattern $OPP_{AFabc}$ for the filter cell stage 14 (also denoted as AF, or active filter). In other words, the offline-computed optimized pulse pattern $OPP_{base}$ may be decomposed into the individual first and second pulse patterns $OPP_{MCabc}$, $OPP_{AF,abc}$ in case the offline-computed optimized pulse pattern $OPP_{base}$ is stored as a combined pattern only. Further details of the parse block are described in the "Main stage and cell stage pattern parser 56" section of the not-yet disclosed European patent application EP 22 183 835.2.

Filter cell balancer 58

The active filter (AF) cell voltage balancer 58 (also denoted as AF balancer) may be implemented as a P controller or a PI controller with a transfer function $G_{PI}(s)$. It operates on the difference of the capacitor or DC link voltage $V_{AFC,k}$ of the filter cell 30 in phase k, with k being a, b, or c, to the reference capacitor (or DC link) voltage $V_{ref}$. The cell capacitor voltage $V_{AFC,k}$ may be filtered with the low-pass filter 59 ($G_{LP}(s)$) or a moving average filter over one half of a fundamental period. The output of the filter cell balancer 58 may be multiplied with the sign of the phase current $I_k$ in the corresponding phase k:

$$U_{AFbal,AF,k} = G_{PI}(s) \cdot \left(V_{AFC,ref} - G_{LP}(s) \cdot V_{AFC,k}\right) \cdot \text{sign}(I_k)$$

The sign of the phase current $I_k$ is expected to be valid for the majority of the upcoming computation window $\alpha_{win}$ (e.g. 60°). For this to be true, the current vector could be rotated (advanced) by up to half of the computation window $\alpha_{win}$ (e.g. 30°).

The second balancing voltage $U_{AFbal,abc}$ will be injected by the filter cells 30 as a deviation from the original optimized pulse pattern $OPP_{base}$ in order to control the cell capacitor voltage $V_{AFC,k}$ to the cell reference voltage $V_{AFC,ref}$. Increasing the injected volt seconds by the filter cells 30 while the output current in the corresponding phase k is positive would discharge the corresponding filter cell 30, in particular the corresponding cell capacitor 38 and bring it back to its reference value. Reducing the injected volt second would have the opposite effect.

NP balancer 68

The NP balancer 68 may comprise a P or a PI controller with transfer function $G_{PI}(s)$. It may operate on the difference of the main converter NP potential to the reference NP potential, which is typically zero ($V_{NP,ref}=0$). The NP potential $V_{NP}$ may be defined as

$$V_{NP} = \frac{V_{bot} - V_{top}}{2}$$

It may be filtered with the second low-pass filter 69 ($G_{LP}(s)$) or a moving average filter. The output of the PI controller may be multiplied with the sign of the current $I_k$ in phase k.

$$S_{NPbal,k} = -G_{PI}(s) \cdot \left(V_{NP,ref} - G_{LP}(s) \cdot V_{NP}\right) \cdot sign(I_k)$$

The sign of the current $I_k$ is expected to be valid for the majority of the upcoming computation window $\alpha_{win}$ (e.g. 60°). For this to be true, the current vector could be rotated (advanced) by up to half of the computation window $\alpha_{win}$ (e.g. 30°).

The balancing signal $S_{NPbal,k}$ may be interpreted as a change (increase or decrease) of the total duration of the zero states in the first pulse pattern $OPP_{MCk}$ of phase k, i.e., the time duration in which the corresponding phase of the MC switches to the NP rail (i.e., to the zero voltage level (vk(t)=0)) over the computation window $\alpha_{win}$.

The NP current may be defined as

$$i_{NP}(t) = \sum_{k} I_k(t) \cdot (v_k(t) == 0)$$

Increasing the duration of the zero states in the phase k while the output current in phase k is positive would lead to an increase in NP current and therefore would discharge the NP potential $V_{NP}$ and bring it back to its reference voltage $V_{NP,ref}$. In case the current $I_k$ is negative, the zero states should be reduced to have the same effect.

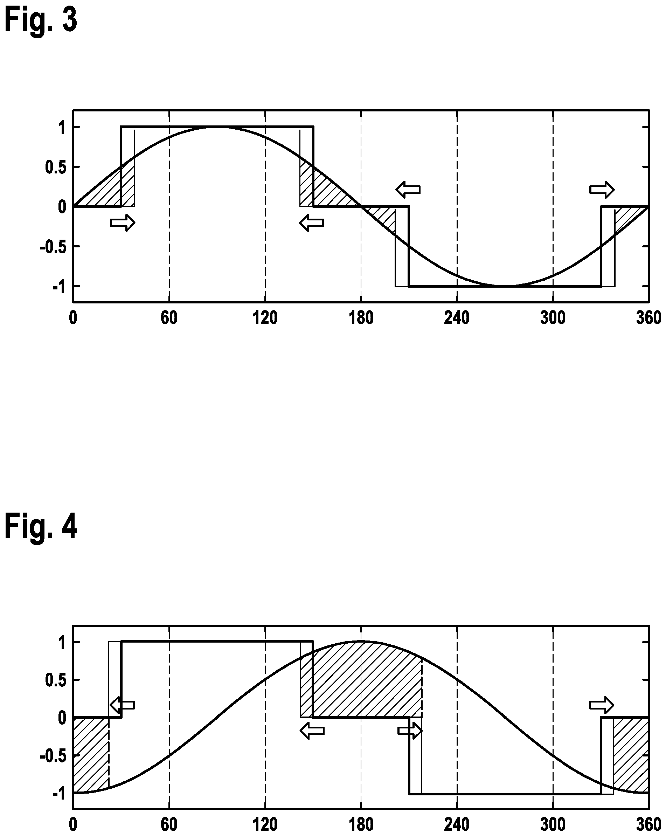

To increase the duration of zero states, in case of positive voltage pulses, positive voltage steps are moved to the right (postponed), whereas negative voltage steps are moved to the left (switched earlier), as may be seen from figures 3 and 4. In case of negative pulses, negative voltage steps are moved to the right (postponed), whereas positive voltage steps are moved to the left (switched earlier). To reduce the duration of zero states, the pulses are moved in the opposite direction.

Figs. 3 shows a diagram of a first example of an adjustment of an optimized pulse pattern, according to an embodiment of the invention. In particular, figure 3 shows shifted MC pulses and the resulting NP charge (hatched area) in case of unity power factor.

Fig. 4 shows a diagram of a second example of an adjustment of an optimized pulse pattern, according to an embodiment of the invention. In particular, Figure 4 shows shifted MC pulses and resulting NP charge (hatched area) in case of zero power factor.

Figures 3 and 4 show the resulting change of zero states for the case of unity power factor and the case of zero power factor, respectively. If all 3 phases of the electrical converter 10 are considered, the resulting change in MC volt-seconds within the computational window $\alpha_{win}$ in general is not a common mode voltage, which is different compared to similar PWM-based NP balancing schemes. Therefore, the output current may be disturbed without further measures. In order to avoid this distortion, the introduced disturbance in MC volt-seconds will be later compensated by the filter cells 30.

It is also possible that the sign of the current $I_k$ is not used and a fixed scheme, based on assuming a certain power factor, to change the zero state durations may then be applied.

In case the MC voltage pulses of phase k within the computation window $\alpha_{win}$ all have the same sign, i.e., there are only positive voltage pulses or only negative voltage pulses, the total change in zero state duration can directly be translated into a total change of the average voltage over the computation window $\alpha_{win}$. If there are only positive voltage pulses, an increase of total zero states duration leads to a reduction of the average voltage. If there are only negative pulses, an increase of total zero state duration leads to an increase of the average voltage. If there are no switching transitions in phase k in the computation window $\alpha_{win}$, the change in zero state duration cannot be imposed and resulting change in average voltage is equal to zero.

$$U_{NPbal,k} = \begin{cases} -S_{NPbal,k}, & if\ v_{j,k} \geq 0\ for\ all\ switching\ transitions\ j\ in\ computation\ window \\ S_{NPbal,k}, & if\ v_{j,k} \leq 0\ for\ all\ switching\ transitions\ j\ in\ computation\ window \\ 0, & if\ no\ switching\ transitions\ in\ phase\ k\ in\ computation\ window \end{cases}$$

Here, $v_{j,k}$ denotes the MC output voltage of phase k at switching transition j within the computation window $\alpha_{win}$. Consequently, the change in zero state duration can be interpreted as change of average voltage provided by the MC over

the computation window $\alpha_{win}$.

In case there are both, positive and negative voltage pulses within the computation window $\alpha_{win}$ (typically avoided by proper selection of the start and end of the window), the change in zero states may be impressed first with the "shift MC angles" algorithm and then the resulting change in MC average voltage could be compensated with the filter cells 30.

Combine references block 60

The changes in average differential mode (DM) output voltage over the computation window $\alpha_{win}$ introduced by the AF balancer 58 need to be compensated by the main stage 12. This is required to reduce current distortions and to ensure that the flux trajectory returns to the original trajectory after the computation window $\alpha_{win}$.

First, the AF balancing voltages may be transformed into the $\alpha\beta$-plane using the Clark transformation to find the required compensation voltages $U_{MC,AFbal,\alpha\beta}$) in the $\alpha\beta$-plane:

$$U_{MC,AFbal,\alpha\beta} = -U_{AFbal,\alpha\beta} = T_{abc}U_{AFbal,abc}$$

with

$$T_{abc} = \begin{bmatrix} 2/3 & -1/3 & -1/3 \\ 0 & 1/\sqrt{3} & -1/\sqrt{3} \end{bmatrix}$$

In the case where the main stage 12 has switching transitions in all three phases within the computation window $\alpha_{win}$, the standard inverse Clark transform may be used to compute the MC compensation voltages $U_{MC,AFbal,abc}$ in the abc-frame. In cases where the main stage 12 operates with a very low pulse number, it is possible that not all three phases have a switching transition within the computation window $\alpha_{win}$, i.e., only two out of three phases have a switching transition. In this case, the computation method for the MC compensation voltages $U_{MC,AFbal,abc}$ in the abc-frame needs to be adapted. With a transformation approach already described in the not-yet disclosed European patent application EP 22 183 835.2, it is still possible. Consequently, the MC compensation voltages $U_{MC,AFbal,abc}$ may be computed out of the $\alpha\beta$-plane voltage $U_{MC,AFbal,\alpha\beta}$, e.g. by using one out of the following four matrices:

$$T_{abc}^{-1} = \begin{bmatrix} 1 & 0 \\ -1/2 & \sqrt{3}/2 \\ -1/2 & -\sqrt{3}/2 \end{bmatrix}$$

$$T_{ab}^{-1} = \begin{bmatrix} 3/2 & \sqrt{3}/2 \\ 0 & \sqrt{3} \\ 0 & 0 \end{bmatrix}$$

$$T_{bc}^{-1} = \begin{bmatrix} 0 & 0 \\ -3/2 & \sqrt{3}/2 \\ -3/2 & -\sqrt{3}/2 \end{bmatrix}$$

$$T_{ac}^{-1} = \begin{bmatrix} 3/2 & -\sqrt{3}/2 \\ 0 & 0 \\ 0 & -\sqrt{3} \end{bmatrix}$$

The switching phases A, B, or C are indicated in the subscripts in the symbols $T_{xx}^{-1}$ of the transforms. If there is no switching in phase a, the matrix Tb-/ is used. If there is no switching in phase b, the matrix $T_{ac}^{-1}$ is used. If there is no switching in phase c, the matrix $T_{ab}^{-1}$ is used. Thus, depending on the phase k which has no switching within the computation window $\alpha_{win}$, the compensation voltage for the MC can be computed with

$$U_{MC,AFbal,abc} = \begin{cases} T_{abc}^{-1} U_{MC,AFbal,\alpha\beta}, & \text{MC switching transitions in all phases in computation window} \\ T_{bc}^{-1} U_{MC,AFbal,\alpha\beta}, & \text{no MC switching transitions in phase a in computation window} \\ T_{ac}^{-1} U_{MC,AFbal,\alpha\beta}, & \text{no MC switching transitions in phase b in computation window} \\ T_{ab}^{-1} U_{MC,AFbal,\alpha\beta}, & \text{no MC switching transitions in phase c in computation window} \end{cases}$$

The sum of the AF balancing voltages $U_{AFbal,\alpha\beta}$ and the MC compensation voltages $U_{MC,AFbal,\alpha\beta}$ over the computation window $\alpha_{win}$ in the $\alpha\beta$-plane is equal to zero:

$$U_{MC,AFbal,\alpha\beta} + U_{AFbal,\alpha\beta} = 0$$

Consequently, also the sum of the differential mode (DM) components of AF balancing and MC compensation voltages for every phase k is zero:

$$U_{MC,AFbal,DM,k} = U_{MC,AFbal,k} - \frac{1}{3}\left(U_{MC,AFbal,a} + U_{MC,AFbal,b} + U_{MC,AFbal,c}\right)$$

$$U_{AFbal,DM,k} = U_{AFbal,k} - \frac{1}{3}\left(U_{AFbal,a} + U_{AFbal,b} + U_{AFbal,c}\right)$$

$$U_{MC,AFbal,DM,k} + U_{AFbal,DM,k} = 0$$

So, there is no change in total DM volt-seconds provided by MC and AF over the computation window $\alpha_{win}$.

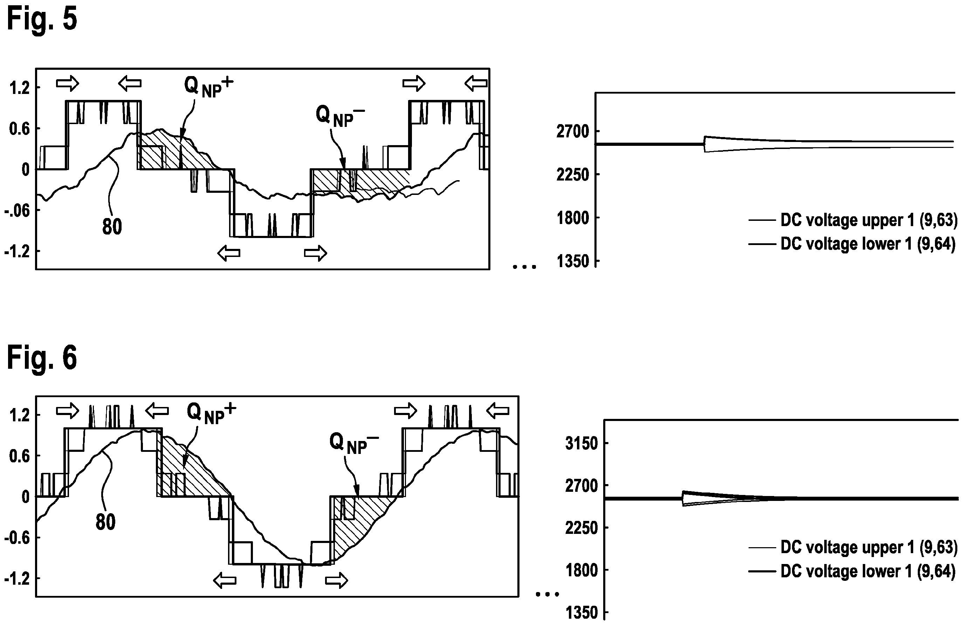

Similarly, the changes in average differential mode (DM) output voltage over the computation window $\alpha_{win}$ introduced by the NP balancer 68 need to be compensated by the filter cell stage 14 in turn. This is required to reduce current distortions, keep the current sinusoidal and to ensure that the flux trajectory returns to the original trajectory after the computation window $\alpha_{win}$. Only if the current is kept sinusoidal, i.e., the distortions related to NP balancing are fully compensated by the AF, will the anticipated NP current and the related NP balancing effect be achieved. A comparison of NP balancing with shifting of MC pulses for the cases a) without compensation with the AF and b) with compensation with the AF are shown in figures 5 and, respectively, 6.

First, the differential mode component $U_{NPbal,DM,k}$ for phase k of the NP balancing voltage is computed:

$$U_{NPbal,DM,k} = U_{NPbal,k} - \frac{1}{3}\left(U_{NPbal,a} + U_{NPbal,b} + U_{NPbal,c}\right)$$

As the introduced change in average voltage over the computation window $\alpha_{win}$ is not necessarily a common mode voltage, $U_{NPbal,DM,k}$ is not equal to zero. Now the DM components needs to be compensated with an equal change of the AF average voltage injected over the computation window:

$$U_{AF,NPbal,k} = -U_{NPbal,DM,k}$$

Such that the sum is equal to zero:

$$U_{AF,NPbal,k} + U_{NPbal,DM,k} = 0$$

Consequently, there is no change of the total DM average voltage provided by the MC and the AF over a computation window $\alpha_{win}$ despite the modifications introduced for NP balancing.

In order to obtain both balancing effects (AF and NP) at the same time, the superposition principle is applied:

$$\Delta U_{MC,abc} = U_{NPbal,abc} + U_{MC,AFbal,abc}$$

$$\Delta U_{AF,abc} = U_{AFbal,abc} + U_{AF,NPbal,abc}$$

Fig. 5 shows a diagram of a third example of an adjustment of an optimized pulse pattern. In particular, figure 5 shows shifted MC pulses for the NP balancing without the compensation of the resulting current distortions with the AF. In the result, the NP cannot be balanced.

Fig. 6 shows a diagram of a third example of an adjustment of an optimized pulse pattern, according to an embodiment of the invention. In particular, figure 6 shows shifted MC pulses for the NP balancing with the compensation of the distortions with the AF. In the result, the current curve 80 stays sinusoidal and anticipated change in NP current is achieved, the NP potential is actively balanced.

Shift MC angles block 62

The required change of MC average voltage over the computation window $\alpha_{win}$ is achieved by moving the MC switching transitions within the computation window $\alpha_{win}$. To increase the average voltage, positive voltage steps are moved to the left by $\Delta\alpha_{MC}$ (switched earlier), whereas negative voltage steps are moved to the right by $\Delta\alpha_{MC}$ (postponed). To reduce the average voltage, the pulses are moved in the opposite direction.

If phase k has $N_{tr,MC,k}$ movable MC switching transitions within the computation window $\alpha_{win}$, to achieve the change in average voltage $\Delta U_{MC,k}$ in phase k each switching transition is moved by an angle of

$$\Delta\alpha_{MC} = \alpha_{win} \cdot \frac{\Delta U_{MC,k}}{N_{tr,MC,k}}$$

Where $\alpha_{win}$ is the computation window length. Applying $\Delta\alpha_{MC}$ to every switching transition ensures that the MC average output voltage over the computation window $\alpha_{win}$ is changed by the desired value. It is also possible that constraints restrict how much a certain pulse can be moved. Furthermore, one could distribute the total required angle shift differently to the available pulses or try to adjust the average in several passes.

If a MC switching transition is synchronized with an AF switching transition, both are shifted by $\Delta\alpha_{MC}$ and pre-considered in the subsequent shift AF angles block 63.

Shift AF angles block 63

The required change of AF average voltage over the computation window $\alpha_{win}$ is achieved by moving the AF switching transitions within the computation window $\alpha_{win}$. To increase the average voltage, positive voltage steps are moved to the left by $\Delta\alpha_{AF}$ (switched earlier), whereas negative voltage steps are moved to the right by $\Delta\alpha_{AF}$ (postponed). To reduce the average voltage, the pulses are moved in the opposite direction.

If phase k has $N_{tr,AF,k}$ movable AF switching transitions within the computation window $\alpha_{win}$, to achieve the change in average voltage $\Delta U_{AF,k}$ in phase k each switching transition is moved by an equal angle of

$$\Delta\alpha_{AF} = \alpha_{win} \cdot \frac{\Delta U_{AF,k}}{N_{tr,AF,k} \cdot r_{AF}}$$

Where $\alpha_{win}$ is the computation window length and $r_{AF}$ is the ratio of AF cell voltage to MC half dc-link voltage (typically $r_{AF}$=1/3). Applying $\Delta\alpha_{AF}$ to every switching transition ensures that the AF average output voltage over the computation window $\alpha_{win}$ is changed by the desired value. It is also possible that constraints restrict how much a certain pulse can be moved. Furthermore, one could distribute the total required angle shift differently to the available pulses or try to adjust the average in several passes.

Switching pattern block 64

In the switching pattern block 64, the modified total optimized pulse pattern 66 must be recomputed from the AF shifted angles and the MC shifted angles, i.e. the individual modified first and second pulse patterns $OPP_{MC,abc}$, $OPP_{AF,abc}$ are combined into a single optimized pulse pattern 66. This is achieved by merging (addition) of the individual patterns. The final result of the adjustment is the modified three-phase optimized pulse pattern 66 over the computation window $\alpha_{win}$. An example set of patterns for the MC, AF and MC+AF showing the original patterns and the adjustments made to balance the AF cell voltages and to balance the NP potential, and to compensate corresponding modifications are shown and described in the not-yet disclosed European patent application EP 22 183 835.2 (see section "Filter cell average voltage adjuster 62" and figure 7).

Flux trajectory generator 72

In a final step of the pattern determination part 44, in block 72, the reference flux trajectory $\Psi_{ref}$ is precomputed from the previously adjusted optimized pulse pattern 66, as described in detail in the not-yet disclosed European patent application EP 22 183 835.2 (see section "Flux trajectory generator 72" and figures 8a and 8b).

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

**List of reference numerals**

| | |
|---|---|
| 10 | electrical converter |
| 12 | main stage |
| 14 | filter cell stage |
| 15 | power grid |
| 16 | electrical load |
| 18 | rectifier |
| 20 | DC link |
| 22 | output converter |
| 23 | 3LNPC half-bridge |
| 24 | output of the main stage |
| 26 | capacitor |
| 28 | resistor |
| 30 | filter cell |
| 32 | output filter |
| 34 | output electrical converter |
| 36 | filter cell half-bridge |
| 38 | cell capacitor |
| 40 | output of the filter cell |
| 42 | controller |
| 44 | pattern determination part |
| 46 | model predictive controller |
| 47 | MP3C core |
| 48 | pattern and flux block |
| 50 | trigger signal |
| 52 | next trigger block |
| 54 | multiple-phase pattern generator |
| 56 | parse block |
| 58 | AF balancer |
| 59 | first low-pass filter |
| 60 | combine references block |
| 62 | shift MC angles block |
| 63 | shift AF angles block |
| 64 | switching pattern block |

68    NP balancer
69    second low-pass filter
72    create flux trajectory block
80    current curve

$OPP_{base}$    offline-computed optimized pulse pattern
$M_i$    modulation index

$\theta_{flux}^*$    flux reference angle

$\alpha_{win}$    computation window
$\alpha_{start}$    starting angle
$V_{AFC,abc}$    cell capacitor voltages
$I_{abc}$    phase current
$OPP_{MCabc}$    first pulse pattern
$OPP_{AF,abc}$    second pulse pattern
$U_{MCbal,abc}$    first balancing signal
$U_{AFbal,abc}$    second balancing signal
$V_{NP}$    neutral point potential
$\Delta U_{MC,abc}$    first voltage change
$\Delta U_{AF,abc}$    second voltage change
$\Psi_{ref}$    reference flux trajectory

**Claims**

1. A method for controlling an electrical converter (10), the electrical converter (10) comprising a main stage (12) adapted for converting a DC voltage into an intermediate voltage having at least two voltage levels and a filter cell stage (14) with a filter cell (30) for each phase of the main stage (12), with the main stage (12) comprising a DC link (20) and with each filter cell (30) being adapted for adding or subtracting a cell voltage of the filter cell (30) to the intermediate voltage, the method comprising the steps of:

    determining a first optimized pulse pattern ($OPP_{MC,abc}$) for the main stage (12) and a second optimized pulse pattern ($OPP_{AF,abc}$) for the filter cells (30) from an offline-computed optimized pulse pattern ($OPP_{base}$), wherein the first optimized pulse pattern ($OPP_{MC,abc}$) comprises switching instants for the main stage (12) over a next computation window ($\alpha_{win}$) and wherein the second optimized pulse pattern ($OPP_{AF,abc}$) comprises switching instants for filter cells (30) over the next computation window ($\alpha_{win}$);
    determining a neutral point potential ($V_{NP}$) depending on a measured lower DC link voltage ($V_{bot}$) and a measured upper DC link voltage ($V_{top}$) of the DC link (20);
    determining a first balancing signal ($U_{NPbal,abc}$) for the main stage (12) depending on the determined neutral point potential ($V_{NP}$);
    determining a second balancing signal ($U_{AFbal,abc}$) for the filter cells (30) depending on measured cell voltages ($V_{AFC,abc}$) of the filter cells (30);
    determining a first differential mode voltage ($U_{NPbal,DM,abc}$) from the first balancing signal ($UNPbal,abc$);
    determining a second differential mode voltage ($U_{AFbal,DM,abc}$) from the second balancing signal ($U_{AFbal,abc}$);
    determining a first voltage change ($\Delta U_{MC,abc}$) from the first balancing signal ($U_{NPbal,abc}$) and the second differential mode voltage ($U_{AFbal,DM,abc}$);
    determining a second voltage change ($\Delta U_{AF,abc}$) from the second balancing signal ($U_{AFbal,abc}$) and the first differential mode voltage ($U_{NPbal,DM,abc}$);
    adjusting the first optimized pulse pattern ($OPP_{MC,abc}$) by moving its switching instants depending on the first voltage change ($\Delta U_{MC,abc}$) over the next computation window ($\alpha_{win}$) and adjusting the second optimized pulse pattern ($OPP_{AF,abc}$) by moving its switching instants depending on the second voltage change ($\Delta U_{AF,abc}$) over the next computation window ($\alpha_{win}$);
    determining a reference flux trajectory ($\Psi_{ref}$) over the next computation window ($\alpha_{win}$) depending on the adjusted first and second optimized pulse pattern ($OPP_{MC,abc}$, $OPP_{AF,abc}$); and
    controlling the electrical converter (10) depending on the determined reference flux trajectory ($\Psi_{ref}$) and on the adjusted first and second optimized pulse pattern ($OPP_{MC,abc}$, $OPP_{AF,abc}$).

2. The method of claim 1, wherein

the offline-computed optimized pulse pattern ($OPP_{base}$) are selected and read from a database, and

the first optimized pulse pattern ($OPP_{MC,abc}$) and the second optimized pulse pattern ($OPP_{AF,abc}$) are determined from the offline-computed optimized pulse pattern ($OPP_{base}$) by decomposing the optimized pulse pattern ($OPP_{base}$) into the first optimized pulse pattern ($OPP_{MC,abc}$) and the second optimized pulse pattern ($OPP_{AF,abc}$).

**3.** The method of one of the previous claims, wherein

the neutral point potential ($V_{NP}$) is determined depending on the measured lower DC link voltage ($V_{bot}$) and the measured upper DC link voltage ($V_{top}$) by substracting the measured upper DC link voltage ($V_{top}$) from the measured lower DC link voltage ($V_{bot}$) and by dividing the result by two.

**4.** The method of one of the previous claims, wherein

the second balancing signal ($U_{NPbal,abc}$) is determined depending on the determined neutral point potential ($V_{NP}$) by determining an intermediate balancing signal ($S_{NPbal,abc}$) from the determined neutral point potential ($V_{NP}$) and a reference neutral point potential ($V_{NP,ref}$), and by setting the second balancing signal ($U_{NPbal,abc}$) to the intermediate balancing signal ($S_{NPbal,abc}$), to the inverted intermediate balancing signal ($S_{NPbal,abc}$), or to zero depending on an output voltage ($V_{j,abc}$) of the corresponding phase of the main stage (12) at a corresponding switching transition (j) within the computation window ($\alpha_{win}$) .

**5.** The method of claim 4, wherein

the second balancing signal ($U_{NPbal,abc}$) is set to the inverted intermediate balancing signal ($S_{NPbal,abc}$), if the output voltage ($V_{j,abc}$) is zero or more,

the second balancing signal ($U_{NPbal,abc}$) is set to the intermediate balancing signal ($S_{NPbal,abc}$), if the output voltage ($V_{j,abc}$) is zero or less, and

the second balancing signal ($U_{NPbal,abc}$) is set to zero, if there are no switching transitions (j) within the computation window ($\alpha_{win}$).

**6.** The method of one of the previous claims, wherein

the intermediate balancing signal ($S_{NPbal,abc}$) may be determined from the determined neutral point potential ($V_{NP}$) and the reference neutral point potential ($V_{NP,ref}$) by filtering the neutral point potential ($V_{NP}$), by subtracting the filtered neutral point potential ($V_{NP}$) from the reference neutral point potential ($V_{NP,ref}$), by multiplying the corresponding difference with a sign of the current in the corresponding phase, and by controlling the corresponding product with a P- or PI-controller.

**7.** The method of one of the previous claims, wherein

the first voltage change ($\Delta U_{MC,abc}$) is determined from the first balancing signal ($U_{NPbal,abc}$) and the second differential mode voltage ($U_{AFbal,DM,abc}$) by subtracting the second differential mode voltage ($U_{AFbal,DM,abc}$) from the first balancing signal ($U_{NPbal,abc}$), and/or

the second voltage change ($\Delta U_{AF,abc}$) is determined from the second balancing signal ($U_{AFbal,abc}$) and the first differential mode voltage ($U_{NPbal,DM,abc}$) by subtracting the first differential mode voltage ($U_{NPbal,DM,abc}$) from the second balancing signal ($U_{AFbal,abc}$).

**8.** The method of one of the previous claims, comprising:

a pattern determination part (44) carrying out the steps from the determining of the first and second optimized pulse pattern ($OPP_{MC,abc}$, $OPP_{AF,abc}$) to the adjusting of the first and second optimized pulse pattern ($OPP_{MC,abc}$, $OPP_{AF,abc}$).

**9.** The method of one of the previous claims, comprising:

a model predictive control part (46) carrying out the steps from determining of the reference flux trajectory ($\Psi_{ref}$) to the controlling of the electrical converter (10), wherein these steps are performed several times during the next computation window ($\alpha_{win}$).

**10.** The method of one of the previous claims, wherein

the reference flux trajectory ($\Psi_{ref}$) is determined depending on the adjusted first and second optimized pulse pattern ($OPP_{MC,abc}$, $OPP_{AF,abc}$) by recombining the adjusted first and second optimized pulse pattern ($OPP_{MC,abc}$, $OPP_{AF,abc}$) and by determining the reference flux trajectory ($\Psi_{ref}$) from the recombined first and second optimized pulse pattern ($OPP_{MC,abc}$, $OPP_{AF,abc}$).

**11.** The method of one of the previous claims, wherein
the next computation window ($\alpha_{win}$) has a predetermined width ($\alpha_w$).

**12.** A computer program for controlling an electrical converter (10), which, when being executed by a processor, is adapted to carry out the steps of the method of one of the previous claims.

**13.** A computer-readable medium, in which a computer program according to claim 12 is stored.

**14.** A controller (42) for controlling an electrical converter adapted for performing the method of one of claims 1 to 11, the controller comprising:

a pattern determination controller (44) for performing steps of a pattern determination part of the method;
a model predictive controller (46) for performing the steps of a model predictive control part of the method.

**15.** An electrical converter (10), comprising:

a main stage (12) having a DC link (20) and being adapted for converting a DC voltage into an intermediate voltage having at least two voltage levels;
a filter cell stage (14) with a filter cell (30) for each phase of the main stage (12), with each filter cell (30) being adapted for adding or subtracting a cell voltage of the filter cell (30) to the intermediate voltage; and
a controller (42) according to claim 14.

# Fig. 1

**Fig. 2**

EP 4 485 773 A1

Fig. 3

Fig. 4

# Fig. 5

# Fig. 6

EP 4 485 773 A1

Europäisches
Patentamt

European
Patent Office

Office européen
des brevets

# EUROPEAN SEARCH REPORT

Application Number

EP 23 18 1567

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 058 646 A1 (ABB TECHNOLOGY AG [CH]) 24 August 2016 (2016-08-24) | 14,15 | INV. H02M1/00 |
| Y | * paragraphs [0001], [0006], [0033] – [0037], [0096] – [0100], [0113], [0122] * | 1-13 | H02M7/483 H02M7/487 |
| | ----- | | ADD. |
| X | US 2019/190397 A1 (ABB SCHWEIZ AG [CH]) 20 June 2019 (2019-06-20) | 14,15 | H02M7/49 |
| Y | * the whole document * * * in particular: * * paragraphs [0005], [0096], [0104], [0129] – [0149] * * figures 1,2 * | 1-13 | |
| | ----- | | |
| X | US 2011/141786 A1 (SHEN JIE [DE] ET AL) 16 June 2011 (2011-06-16) | 14,15 | |
| Y | * paragraphs [0018], [0023] * * figures 1-4 * | 1-13 | |
| | ----- | | |

TECHNICAL FIELDS
SEARCHED      (IPC)

H02M

The present search report has been drawn up for all claims

| Place of search | Date of completion of the search | Examiner |
|---|---|---|
| The Hague | 30 November 2023 | Standaert, Frans |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 18 1567

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2023

| Patent document cited in search report | | Publication date | Patent family member(s) | | Publication date |
|---|---|---|---|---|---|
| EP 3058646 | A1 | 24-08-2016 | CA | 2926825 A1 | 23-04-2015 |
| | | | CN | 105850015 A | 10-08-2016 |
| | | | EP | 3058646 A1 | 24-08-2016 |
| | | | US | 2016226368 A1 | 04-08-2016 |
| | | | WO | 2015055444 A1 | 23-04-2015 |
| US 2019190397 | A1 | 20-06-2019 | CN | 109565248 A | 02-04-2019 |
| | | | EP | 3497782 A1 | 19-06-2019 |
| | | | US | 2019190397 A1 | 20-06-2019 |
| | | | WO | 2018029303 A1 | 15-02-2018 |
| US 2011141786 | A1 | 16-06-2011 | CN | 102437760 A | 02-05-2012 |
| | | | DK | 2437389 T3 | 28-05-2018 |
| | | | EP | 2437389 A2 | 04-04-2012 |
| | | | US | 2011141786 A1 | 16-06-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2469692 A1
- EP 22183835 A
- EP 3729637 A1

### Non-patent literature cited in the description

- **G. DARIVIANAKIS** ; **E.R. ROHR** ; **T. GEYER** ; **F. KIEFERNDORF**. Neutral-point balancing using optimized pulse patterns. *ABB Technical Report*, 16 March 2021
- **G. DARIVIANAKIS**. Neutral-point balancing using optimized pulse patterns. A novel concept based on continuous angle modifications. *ABB Technical Report*, 18 March 2021